# EUROPÄISCHE PATENTSCHRIFT

(11) **EP 3 582 903 B1**
(45) Veröffentlichungstag und Bekanntmachung des Hinweises auf die Patenterteilung: **01.10.2025**
(21) Anmeldenummer: 18709918.9
(22) Anmeldetag: 14.02.2018
(51) Int. Cl.: B04B 7/00, B04B 1/20, B23K 9/04

(54) **VOLLMANTELSCHNECKENZENTRIFUGEN-SCHNECKE MIT EINER SCHNECKENNABE**
SOLID-BOWL CENTRIFUGE SCREW HAVING A SCREW HUB
VIS SANS FIN DE CENTRIFUGEUSE À VIS À BOL PLEIN DOTÉE D'UN MOYEU

(30) Priorität: 15.02.2017 DE 102017103068
(43) Veröffentlichungstag der Anmeldung: 25.12.2019
(73) Patentinhaber: Flottweg SE, 84137 Vilsbiburg (DE)
(72) Erfinder: SCHEIDHAMMER, Matthias, 84137 Vilsbiburg (DE); MEYER, Manfred, 84155 Bodenkirchen (DE)
(74) Vertreter: Meissner Bolte Partnerschaft mbB
(86) Internationale Anmeldenummer: PCT/DE2018/100132
(87) Internationale Veröffentlichungsnummer: WO 2018/149454

(56) Entgegenhaltungen:
- EP-A1- 0 496 181
- EP-A2- 1 005 941
- WO-A1-2007/104455
- DE-A1- 3 422 638
- US-A- 4 775 092

## Beschreibung

Die Erfindung betrifft eine Vollmantelschneckenzentrifugen-Schnecke mit einer Schneckennabe. Ferner betrifft die Erfindung ein Herstellungsverfahren einer solchen Vollmantelschneckenzentrifugen-Schnecke.

Eine herkömmliche Vollmantelschneckenzentrifugen-Schnecke ist mit einer radial innen liegenden, hohlzylinderförmigen Schneckennabe und einer die Schneckennabe umgebenden Schneckenwendel gebildet. Dabei erstreckt sich die Schneckenwendel in der Regel als gewundenes Blech außenseitig um die Schneckennabe, die als metallisches Rohr oder als mehrere metallische Rohrabschnitte gestaltet ist. Die derartige Schneckennabe ist an ihren beiden axialen Endbereichen drehbar und koaxial innerhalb einer meist waagrecht angeordneten Trommel einer Vollmantelschneckenzentrifuge gelagert.

In WO 2007/104455 A1 wird beispielhaft eine Vollmantelschneckenzentrifugen-Schnecke gezeigt, die eine aus einem Vollmaterial gebildete Nabe aufweist.

Während eines Betriebs einer solchen Zentrifuge dreht sich die Vollmantelschneckenzentrifugen-Schnecke relativ zur Trommel und taucht dabei in ein sich in der Trommel befindendes Phasengemisch ein. Aus dem Phasengemisch fördert die Schneckenwendel dabei eine sich nach radial außen separierende schwere bzw. dichtere Phase aus einer sich radial innen sammelnden leichten bzw. weniger dichten Phase. Die schwere Phase umfasst je nach Anwendungsgebiet oftmals besonders schwere Feststoffe, wie Erde, Sand und Steine.

Gerade bei solchen Feststoffen ist während des Betriebs eine mechanische Belastung der Schnecke und insbesondere der Schneckennabe enorm. Aufgrund der waagrechten Lagerung der Schneckennabe und vergleichsweise hoher Rotations-geschwindigkeiten wirken besonders starke Querkräfte auf die Schneckennabe.

Damit sind die Anforderungen an Härte, Festigkeit und Biegesteifigkeit der Schneckennabe enorm.

### Zugrundeliegende Aufgabe

Der Erfindung liegt die Aufgabe zugrunde, eine besonders stabile Vollmantelschneckenzentrifugen-Schnecke zu schaffen und ein entsprechendes kostengünstiges Herstellungsverfahren bereitzustellen.

### Erfindungsgemäße Lösung

Diese Aufgabe ist erfindungsgemäß mit Vollmantelschneckenzentrifugen-Schnecke mit einer Schneckennabe gelöst, bei der die Schneckennabe mittels formgebendem Aufbauschweißen hergestellt ist.

Mittels des formgebenden Aufbauschweißens ist erfindungsgemäß eine Schneckennabe hergestellt, die aus Schweißnähten bzw. Schweißschichten gebildet ist. Dabei ist eine erste Schweißschicht kreisförmig an einem metallischen Grundkörper aufgetragen. Auf die erste Schweißschicht ist nachfolgend eine zweite Schweißschicht, auf die zweite Schweißschicht nachfolgend eine dritte Schweißschicht und so weiter aufgetragen. Die derart nacheinander und aufeinander aufgetragenen Schweißschichten bilden einen Hohlzylinder, der sehr hart, fest und überraschend biegesteif ist. Dieser Hohlzylinder kann ohne weitere Nachbearbeitung als Schneckennabe eingesetzt werden, sodass mittels des formgebenden Aufbauschweißens bereits nach nur einem Arbeitsschritt eine besonders stabile Schneckennabe hergestellt ist. Damit ist die erfindungsgemäße Schneckennabe nicht nur wesentlich stabiler, sondern auch wesentlich kostengünstiger in der Herstellung als bekannte Schneckennaben. Als Grundmaterial für das erfindungsgemäße Aufbauschweißen werden bevorzugt Chrom-Nickel-Stähle, Duplex-Stähle und Nickel-Basis-Stähle verwendet.

Erfindungsgemäß vorteilhaft ist die erfindungsgemäße Schneckennabe mittels Schweißen mit aktivem, reaktionsfähigem Schweißgas oder mit inertem Schweißgas als formgebendem Aufbauschweißen hergestellt. Solche Schweißverfahren werden auch als MAG- bzw. MIG-Schweißen bzw. als Schweißen mit Aktivgas oder Inertgas bezeichnet. Zusammengefasst werden solche Verfahren als Metallschutzgasschweißen (MSG) bezeichnet. Solche Schweißverfahren sind in der Norm EN ISO 4063: Prozess 135 und 131 definiert.

Darüber hinaus wird erfindungsgemäß bevorzugt gezielt ein Schweißgas aus bestimmten Untergruppen von Schweißgasen ausgewählt. Schweißgase sind gemäß Norm DIN EN ISO 14175 in die Hauptgruppen I, M1, M2, M3, C, R, N, O und Z eingeteilt. Von den Schweißgasen diesen Hauptgruppen werden vorzugsweise nur solche Schweißgase gewählt, die in die Hauptgruppen I, M1, M2 und N fallen. Andere Schweißgase werden gemäß der Erfindung bewusst ausgenommen, denn diese weiteren Schweißgase, so hat sich gemäß der Erfindung gezeigt, sind für die erfindungsgemäß angestrebte Lösung nicht zielführend.

Die Hauptgruppe I umfasst Schweißgase mit 100 Volumen-Prozent nominell Argon (Untergruppe 1), 100 Volumen-Prozent nominell Helium (Untergruppe 2) und 0,5 bis 95 Volumen-Prozent nominell Helium sowie Rest Argon (Untergruppe 3).

Diese Schweißgase sind vollständig inert.

Die Hauptgruppe M1, Untergruppe 1 umfasst Schweißgase mit 0,5 bis 5,0 Volumen-Prozent nominell Kohlendioxid, 0,5 bis 5,0 Volumen-Prozent nominell Wasserstoff sowie Rest Argon oder Helium. Diese Schweißgase sind gering oxidierend und nur gering reduzierend. Die Hauptgruppe M1, Untergruppe 2 umfasst Schweißgase mit 0,5 bis 5,0 Volumen-Prozent nominell Kohlendioxid sowie Rest Argon oder Helium. Diese Schweißgase sind gering oxidierend. Die Hauptgruppe M1, Untergruppe 3 umfasst Schweißgase mit 0,5 bis 3,0 Volumen-Prozent nominell Sauerstoff sowie Rest Argon oder Helium. Diese Schweißgase sind ebenfalls gering oxidierend. Die Hauptgruppe M1, Untergruppe 4 umfasst Schweißgase mit 0,5 bis 5,0 Volumen-Prozent nominell Kohlendioxid, 0,5 bis 3,0 Volumen-Prozent nominell Sauerstoff sowie Rest Argon oder Helium. Diese Schweißgase sind wiederum gering oxidierend.

Die Hauptgruppe M2, Untergruppe 0 umfasst Schweißgase mit 5,0 bis 15,0 Volumen-Prozent nominell Kohlendioxid sowie Rest Argon oder Helium. Diese Schweißgase sind wenig oxidierend. Die Hauptgruppe M2, Untergruppe 1 umfasst Schweißgase mit 15,0 bis 25,0 Volumen-Prozent nominell Kohlendioxid sowie Rest Argon oder Helium. Diese Schweißgase sind ebenfalls wenig oxidierend. Die Hauptgruppe M2, Untergruppe 2 umfasst Schweißgase mit 3,0 bis 10,0 Volumen-Prozent nominell Sauerstoff sowie Rest Argon oder Helium. Diese Schweißgase sind ebenfalls noch wenig oxidierend. Die Hauptgruppe M2, Untergruppe 3 umfasst Schweißgase mit 0,5 bis 5,0 Volumen-Prozent nominell Kohlendioxid, 3,0 bis 10,0 Volumen-Prozent nominell Sauerstoff sowie Rest Argon oder Helium. Die Hauptgruppe M2, Untergruppe 4 umfasst Schweißgase mit 5,0 bis 15,0 Volumen-Prozent nominell Kohlendioxid, 0,5 bis 3,0 Volumen-Prozent nominell Sauerstoff sowie Rest Argon oder Helium. Die Hauptgruppe M2, Untergruppe 5 umfasst Schweißgase mit 5,0 bis 15,0 Volumen-Prozent nominell Kohlendioxid, 3,0 bis 10,0 Volumen-Prozent nominell Sauerstoff sowie Rest Argon oder Helium. Die Hauptgruppe M2, Untergruppe 6 umfasst Schweißgase mit 15,0 bis 25,0 Volumen-Prozent nominell Kohlendioxid, 0,5 bis 3,0 Volumen-Prozent nominell Sauerstoff sowie Rest Argon oder Helium. Die Hauptgruppe M2, Untergruppe 7 umfasst Schweißgase mit 15,0 bis 25,0 Volumen-Prozent nominell Kohlendioxid, 3,0 bis 10,0 Volumen-Prozent nominell Sauerstoff sowie Rest Argon oder Helium. Auch diese Schweißgase sind noch vergleichsweise wenig oxidierend.

Die Hauptgruppe N, Untergruppe 1 umfasst Schweißgase mit 100 Volumen-Prozent nominell Stickstoff. Die Hauptgruppe N, Untergruppe 2 umfasst Schweißgase mit 0,5 bis 5,0 Volumen-Prozent nominell Stickstoff sowie Rest Argon oder Helium. Die Hauptgruppe N, Untergruppe 3 umfasst Schweißgase mit 5,0 bis 50,0 Volumen-Prozent nominell Stickstoff sowie Rest Argon oder Helium. Die Hauptgruppe N, Untergruppe 4 umfasst Schweißgase mit 0,5 bis 1,0 Volumen-Prozent nominell Wasserstoff, 0,5 bis 5,0 Volumen-Prozent nominell Stickstoff sowie Rest Argon oder Helium. Die Hauptgruppe N, Untergruppe 5 umfasst Schweißgase mit 0,5 bis 50,0 Volumen-Prozent nominell Wasserstoff sowie Rest Stickstoff. Diese Schweißgase sind sämtlich reaktionsträge, sie sind mit hohem Argon- oder Helium-Gehalt inert und sie sind selbst mit steigendem Wasserstoff-Gehalt nur wenig reduzierend.

Zusammenfassend werden erfindungsgemäß also gezielt Schweißgase gewählt, die inert sind, wenig oxidierend und/oder wenig reduzierend. Wie sich erfindungsgemäß gezeigt hat, kann mit einem solchen Verfahren bei dem formgebenden Aufbauschweißen mit einer oxidationsarmen Schweißraupe und weitgehend ohne Schlacke gearbeitet werden. Damit können die Schweißnähte bzw. Schweißraupen besonders gut formschlüssig und stoffschlüssig sowie aneinanderhaftend übereinandergelegt werden. Darüber hinaus kann mit einem besonders schnellen Schweißtempo gearbeitet werden, das besonders kurze Herstellungszeiten ermöglicht. Der eigentliche Vorteil des schnellen Schweißtempos liegt darin, dass die Schneckennabe und bereits aufgebrachte Schweißraupen beim Schweißen nur wenig punktuell erhitzt werden. Es entsteht damit nur wenig Verzug bzw. Verformung. Der besondere Vorteil der erfindungsgemäßen Vorgehensweise liegt aber überraschenderweise darin, dass ein solches Aufbauschweißen eine besonders hohe Verschleißfestigkeit der dabei hergestellten Wendelfläche ergibt.

Bei einer vorteilhaften Weiterbildung der Erfindung weist das Schweißgas einen Anteil an Kohlendioxid von weniger als zwanzig Volumen-Prozent nominell auf.

Ein derart geringer Kohlendioxidgehalt ermöglicht es insbesondere, dass erfindungsgemäß vorteilhaft Baustähle mittels Impulsschweißen verarbeitet werden können. Zugleich ist ein vergleichsweise hoher Abbrand des Schweißdrahtes möglich. Damit ergeben sich ein hoher Masseaufbau während des Schweißens und eine besonders schnelle Arbeitsweise. Vorzugsweise wird als Schweißgas ferner Schweißgas verwendet, das einen Anteil an Sauerstoff von weniger als drei Volumen-Prozent nominell aufweist. Solche Schweißgase sind besonders wenig oxidierend. Schweißgase, die einen hohen Anteil an Argon aufweisen, sind ferner besonders preiswert.

Besonders bevorzugt wird die erfindungsgemäße Schutzgas-Schweißeinrichtung mit einem Impulslichtbogen betrieben. Ein solcher Impulslichtbogen lässt eine präzise Steuerung der Abschmelzung des Schweißdrahts an der Schutzgas-Schweißeinrichtung zu. Darüber hinaus kann der Wärmeeintrag in das Werkstück gezielt besonders gering gehalten und temperaturbedingte Verformung kann gering gehalten werden.

Der elektrische Schweißstrom der derartigen Impulslichtbogen-Schweißeinrichtung weist vorzugsweise einen Grundstrom kleiner 200 Ampere und einen Impulsstrom größer 200 Ampere auf. Solche Schweißströme sind vorteilhaft bei besonders präzisem Materialaufbau mit vergleichsweise kleiner Abschmelzleistung. Als Schweißgas wird dabei vorteilhaft ein Schweißgas mit 98 Volumen-Prozent nominell Argon und 2 Volumen-Prozent nominell Kohlendioxid verwendet.

Von besonderem Vorteil ist es ferner, die erfindungsgemäße Schutzgas-Schweißeinrichtung mit einem Kurzlichtbogen, insbesondere einem energiereduzierten Kurzlichtbogen zu betreiben. Ein solches Verfahren mit Kurzlichtbogen wird auch als Cold-Arc bezeichnet, ein Verfahren mit besonders kaltem Lichtbogen also. Für die Erzielung eines dennoch schmelzstarken Lichtbogens wird besonders vorteilhaft mit einem verstärkten Aufschmelzstromimpuls gearbeitet.

Die erfindungsgemäße Schutzgas-Schweißeinrichtung wird besonders vorteilhaft mit einem Schweißdraht, oder vorteilhaft auch zwei Schweißdrähten (Twin-Schweißverfahren) mit einem Durchmesser von 0,5 mm bis 3,0 mm, bevorzugt von 1,0 mm bis 1,6 mm betrieben. Überraschenderweise führt gerade ein solcher

Schweißdraht-Durchmesser zu einer hohen Schweißgeschwindigkeit und zugleich zu besonders geringer thermisch bedingter Verformung.

Der Grundkörper des erfindungsgemäßen Werkstücks wird bevorzugt während des Herstellens des metallischen Werkstücks bewegt. Mit dem Bewegen wird das Werkstück dabei an seiner Schweißstelle derart ausgerichtet, dass sich für die aufgebrachte Schweißlage eine optimale Position ergibt.

Der besondere Vorteil der erfindungsgemäßen Vorgehensweise liegt aber überraschenderweise darin, dass ein solches Aufbauschweißen eine besonders hohe Biegesteifigkeit der dabei hergestellten Schneckennabe ergibt.

Bei einer vorteilhaften Weiterbildung der Erfindung weist die Schneckennabe einen zylindrischen Längsabschnitt auf, der als Rohr mittels eines herkömmlichen Verfahrens hergestellt ist. Damit kann der derartige zylindrische Längsabschnitt als metallischer Grundkörper für das Aufbringen der ersten Schweißschicht dienen und zugleich material- und arbeitssparend als Bestandteil der Schneckennabe genutzt werden.

Ferner weist die erfindungsgemäße Schneckennabe vorzugsweise einen kegelstumpfförmigen Längsabschnitt auf, der mittels formgebendem Aufbauschweißen hergestellt ist. Je nach Trennaufgabe ist es von Vorteil, einen Längsabschnitt der Schneckennabe kegelstumpfförmig bzw. konisch zu gestalten. Ein solch kegelstumpfförmiger Längsabschnitt ist bevorzugt in Austragsrichtung der schweren Phase innerhalb der Trommel am Ende der Schneckennabe vorgesehen. Dabei ist die Trommel dort ebenfalls entsprechend des kegelstumpfförmigen Längsabschnitts in Richtung Trommelende konisch zulaufend gestaltet. Derart gestaltet, kann bei einer Rotation der Schneckennabe die schwere, meist feste Phase mittels der Schneckenwendel weiter nach radial innen angehoben werden als eine von der leichten, flüssigen Phase gebildeten Teichtiefe. Damit kann die schwere Phase besonders gründlich von der leichten Phase getrennt werden. Solche für den Trenneffekt wichtigen kegelstumpfförmigen Längsabschnitte können herkömmlich nur aufwendig und kostspielig, insbesondere mittels Gießverfahren, Drehverfahren oder Fräsverfahren hergestellt werden.

Mittels des formgebenden Aufbauschweißens kann nun erfindungsgemäß vorteilhaft ein solch kegelstumpfförmiger Längsabschnitt, wie bereits beschrieben, besonders kostengünstig und stabil hergestellt sein. Zudem kann der derartige kegelstumpfförmige Längsabschnitt damit bevorzugt als ein Schweißstück zusammen mit dem restlichen hohlzylindrischen Längsabschnitt der Schneckennabe hergestellt sein. Andernfalls notwendige aufwendige Fügemaßnahmen, mit denen immer eine Gefahr von Sollbruchstellen nicht ausgeschlossen werden kann, können entfallen.

Besonders bevorzugt schließt sich an den erfindungsgemäß mittels formgebendem Aufbauschweißen hergestellten ersten kegelstumpfförmigen Längsabschnitt ein ebenfalls derart hergestellter zweiter kegelstumpfförmiger Längsabschnitt an.

Dabei ist der erste und der zweite kegelstumpfförmige Längsabschnitt vorteilhaft als stabiler Doppelkonus gestaltet, der in dessen Mitte einen im Querschnitt größeren Konusdurchmesser aufweist als der zylindrische Längsabschnitt der Schneckennabe. Herkömmlich hergestellt ist ein solcher Doppelkonus innerhalb der Schneckennabe teuer und aufwendig. Mittels des formgebenden Aufbauschweißens kann dieser besonders vorteilhafte Doppelkonus nun kostengünstig und stabil als ein Schweißstück zusammen mit dem restlichen Hohlzylinder der Schneckennabe hergestellt sein.

Zudem weist die erfindungsgemäße Schneckennabe in vorteilhafter Weise einen gitterförmigen Längsabschnitt auf, der mittels formgebendem Aufbauschweißen hergestellt ist. Ein solcher gitterförmiger Längsabschnitt weist neben dem Material der Schweißschichten mindestens eine Öffnung auf. Durch eine solche Öffnung kann im Inneren der Schneckennabe sich befindendes zu zentrifugierendes Medium von radial innen nach radial außen in die Trommel strömen, wo es in seine Phasen getrennt wird. Die derartige mindestens eine Öffnung ist mittels des Aufbauschweißens des gitterförmigen Längsabschnitts bevorzugt bereits beim form-gebenden Aufbauschweißen der Schneckennabe ausgespart worden. In nur einem Arbeitsschritt ist damit die Schneckennabe besonders schnell und kostengünstig herstellbar.

Erfindungsgemäß vorteilhaft weist die Schneckennabe ferner eine Einlaufkammer auf, die mittels formgebendem Aufbauschweißen hergestellt ist. Eine solche Einlaufkammer ist bevorzugt im Inneren der hohlzylinderförmigen Schneckennabe angeordnet. Dort hinein ist zu zentrifugierendes Medium einzubringen, das bei rotierender Schneckennabe von der Einlaufkammer aus durch mindestens eine

Öffnung von radial innen nach radial außen in die Trommel strömt. Innerhalb der Einlaufkammer kann mittels einer dort angeordneten und speziell schräg zur Drehachse gestellten Begrenzungsfläche das dort eingebrachte Medium relativ turbulenzarm schonend vorbeschleunigt werden. Erst dann tritt das Medium bei rotierender Schneckennabe durch die mindestens eine Öffnung als Verteileröffnung in die Trommel aus. Die derartige Einlaufkammer ist erfindungsgemäß bevorzugt zusammen mit dem formgebenden Aufbauschweißen der Schneckennabe in nur einem Arbeitsschritt besonders schnell und kostengünstig herstellbar. Zudem kann eine solche mit der Schneckennabe mittels eines homogenen Schweißmaterials einstückig gestaltete Einlaufkammer im Medienstrom auftretende Druckdifferenzen über die gesamte Schneckennabe verteilt aufnehmen. Andernfalls auftretende starke Turbulenzen mit Medienstrom können somit gedämpft und Energieverluste reduziert werden.

Zudem weist die erfindungsgemäße Schneckennabe vorteilhafterweise ein Einlaufrohr auf, das mittels formgebendem Aufbauschweißen hergestellt ist. Ein solches Einlaufrohr ist bevorzugt im Inneren der hohlzylinderförmigen Schneckennabe angeordnet. Derart angeordnet, kann durch das Einlaufrohr hindurch gezielt und mit bedarfsgerechtem Druck zu zentrifugierendes Medium in das Innere der Schneckennabe, insbesondere in eine dort vorgesehene Einlaufkammer, geleitet werden. Es hat sich gezeigt, dass ein solches Einlaufrohr, das erfindungsgemäß bevorzugt bereits mittels des formgebenden Aufbauschweißens zusammen und einstückig mit der Schneckennabe gebildet worden ist, überraschend einfach her-zustellen ist. Dabei hat das derartige Einlaufrohr den entscheidenden Vorteil, dass ansonsten notwendige, aufwendige Befestigungsmaßnahmen des Einlaufrohrs im Inneren der Schneckennabe entfallen können.

Darüber hinaus weist die Schneckennabe erfindungsgemäß vorteilhaft mindestens eine Lagerabstützung bzw. einen Lagerabschnitt auf, der mittels eines herkömmlichen Drehverfahrens hergestellt ist. Diese Lagerabstützung ist mittels Drehen als spanendes Fertigungsverfahren besonders präzise in seiner Rundung und eben in seiner Oberfläche zu gestalten. Derart gestaltet, kann die mindestens eine Lager-abstützung die Schneckennabe in ihrer Rotation passgenau weitgehend ohne ansonsten auftretende Unwucht führen. Die weiteren Abschnitte der Schneckennabe, die mittels formgebendem Aufbauschweißen hergestellt sind weisen eine vergleichsweise raue Oberfläche auf. Überraschenderweise hat dies in einer Vollmantelschneckenzentrifuge keine maßgeblichen negativen Auswirkungen. In Kombination mit der mittels Drehen hergestellten hochpräzisen Lagerabstützung ist sogar eine kostengünstige und besonders biegesteife Schneckennabe herstell-bar, die zudem eine hohe Lagergenauigkeit aufweist.

Die Erfindung betrifft ferner ein Herstellungsverfahren einer Vollmantelschnecken-zentrifugen-Schnecke, bei dem die Schneckennabe der Vollmantelschneckenzentrifugen-Schnecke mittels formgebendem Aufbauschweißen hergestellt wird, wobei das Aufbauschweißen mittels einer Schweißeinrichtung mit einem Schweißgas erfolgt und die Schneckennabe während des Aufbauschweißens gedreht wird.

Erfindungsgemäß wird die Schneckennabe während des Aufbauschweißens gedreht. Mit dem Drehen wird die sich bildende hohlzylind-rische Schneckennabe dabei an ihrer Schweißstelle jeweils derart ausgerichtet, dass sich für die aufgebrachte Schweißlage eine optimale Lage ergibt. Dabei wird die Schweißlage besonders bevorzugt auf einer waagrechten Oberfläche aufgebracht. Vorteilhaft ist es auch, wenn die Schweißlage auf eine in Schweißrichtung leicht ansteigende Oberfläche aufgebracht wird. Der Steigungswinkel beträgt vorzugsweise zwischen 5 und 15°, vorteilhaft zwischen 7° und 10°. Der Grundkörper wird entsprechend vorzugsweise derart gedreht, dass am Schweißort der Schweißeinrichtung eine horizontale Schweißoberfläche oder eine in Schweißrichtung der Schweißeinrichtung ansteigende Schweißoberfläche vorliegt.

Bei einer vorteilhaften Weiterbildung der Erfindung ist auch die Schneckenwendel mittels formgebendem Aufbauschweißen hergestellt. Eine solche mittels formgebenden Aufbauschweißens hergestellte Wendelfläche ist überraschenderweise derart hart und fest, dass keine weitere Bearbeitung erforderlich ist. Damit ist bereits nach dem einen Arbeitsschritt des Aufbauschweißens eine besonders verschleißfeste Schneckenwendel hergestellt.

Die Schneckenwendel ist vorzugsweise mit einer in Längsrichtung der Schnecke variierenden Wendelsteigung gestaltet. Mittels der derartigen variierenden Wendelsteigung kann die Geschwindigkeit des Materialtransports, insbesondere des Transports der schweren Phase, in Längsrichtung der Schnecke je nach Bedarf angepasst werden. Eine geringe Wendelsteigung verbessert den Materialtransport bei schwer förderbarem Feststoff. Eine solch erfindungsgemäß vorteilhafte variierende Wendelsteigung kann mittels des formgebenden Aufbauschweißens besonders schnell und einfach mit hoher Variabilität und geringem Arbeitskräfteaufwand hergestellt werden. Es müssen lediglich unterschiedliche Steigungsbereiche in ein eine automatische Schweißeinrichtung steuerndes Datenverarbeitungsgerät ein-gegeben werden.

Entsprechend schnell, einfach und kostengünstig in der Herstellung kann mittels des formgebenden Aufbauschweißens die Schneckenwendel erfindungsgemäß vorteilhaft als eine mehrgängige Wendel gestaltet sein. Eine solche mehrgängige Wendel umfasst als Gänge mehrere kongruente Schraubenlinien bzw. Helices, die in ihrer Ganghöhe gegeneinander versetzt sind. Mittels einer solchen Schneckenwendel mit mehrgängiger Wendel kann eine große axiale Bewegung bei vergleichsweise geringer Drehung erzeugt werden. Ein besonders schneller Materialtransport in Längsrichtung der Schneckenwendel kann damit erreicht werden.

Erfindungsgemäß bevorzugt ist die Schneckenwendel ferner mit einem Wuchtgewicht versehen, das ebenfalls mittels formgebendem Aufbauschweißen hergestellt ist. Mit mindestens einem solchen Wuchtgewicht können ungleiche Massenverteilungen und konstruktive Unwuchten an der Schneckenwendel und an der damit verbundenen Schneckennabe ausgeglichen sein. Das einzelne Wuchtgewicht kann besonders präzise hinsichtlich Ort und Größe auf die Schneckenwendel geschweißt sein. Zudem ist das derart auftragsgeschweißte Wuchtgewicht besonders stabil dank des stoffschlüssigen Schweißauftrags an der Schneckenwendel angebracht. Eine solche stabile und ortsgenaue Anordnung des einzelnen Wucht-gewichts ist insbesondere bei den hohen während des Betriebs von Vollmantelschneckenzentrifugen vorherrschenden Rotationsgeschwindigkeiten von großem Vorteil. Eine Unwucht und dadurch erzeugte Vibrationen würden sich andernfalls um ein Vielfaches belastend auf nahezu sämtliche Bauteile auswirken.

Ferner ist es vorteilhaft, die erfindungsgemäße Schneckenwendel mit mindestens einer Durchgangsöffnung zu versehen, die ebenfalls mittels formgebendem Aufbauschweißen hergestellt ist. Eine solche Durchgangsöffnung ermöglicht einen wesentlich schnelleren und energiesparenderen Abtransport der leichteren, radial innen liegenden Phase im Vergleich zu einem Abtransport mittels einer Schneckenwendel ohne Durchgangsöffnung. Ohne Durchgangsöffnung muss die radial innen liegende, leichte Phase entlang sämtlicher Windungen der Schneckenwendel entgegen einer Transportrichtung der radial außen liegenden, schweren Phase abfließen. Dieser Weg entlang der Windungen ist erheblich länger, verglichen mit einem Weg, den die leichte Phase bei einem Durchtritt durch mindestens eine Durchgangsöffnung zurückzulegen hat. Die derartige Durchgangsöffnung kann erfindungsgemäß bevorzugt bereits beim formgebenden Aufbauschweißen der Schneckenwendel innerhalb der Wendelfläche ausgespart worden sein. In nur einem Arbeitsschritt ist damit die Schneckenwendel besonders schnell und kostengünstig herstellbar.

Zudem ist es vorteilhaft, die erfindungsgemäße Schneckenwendel mit einer profilierten Wendelquerschnittsfläche zu gestalten. Eine solche profilierte Wendelquerschnittsfläche kann je nach individuellem Bedarf in einer großen Formenvielfalt fertigungstechnisch besonders einfach mittels des formgebenden Aufbauschweißens hergestellt werden. Dabei ist die Wendelquerschnittsfläche an ihrem radial innen an der Schneckennabe anzuliegenden Ende als Wendelfuß insbesondere verdickt und/oder mit einer Rundung gestaltet. Derart gestaltet, kann daran beim Betrieb entlanglaufende leichte Phase energiesparend ohne große Strömungswiderstände abfließen. Ein an den Wendelfuß anschließender Wendelhals ist bevorzugt nach radial außen mit einem Anstellwinkel bzw. einer Neigung insbesondere sich verjüngend gestaltet. Damit kann also im mittleren Bereich der Wendelquerschnittsfläche dort entlanglaufendes Material ähnlich einer Schaufelfläche in seiner Bewegung verstärkt werden, womit zusätzlich Energie gespart werden kann.

Ein an den Wendelhals anschließender radial außen liegender Wendelkopf ist bevorzugt mit einer Räumkante und/oder einer zusätzlichen Beschichtung gestaltet. Mittels der Räumkante kann die radial außen an der Trommel anliegende schwere Phase besonders umfassend aufgenommen und aus der Trommel ausgeschoben werden. Die zusätzliche Beschichtung kann diesen besonders stark belasteten Bereich der Wendel gegen Abrieb insbesondere durch Sand und Geröll schützen.

Darüber hinaus ist erfindungsgemäß vorteilhaft an der Schneckenwendel eine aufstauend wirkende Scheibe in Form einer Stauscheibe, Tauchscheibe oder Flotatscheibe ausgebildet, die ebenfalls mittels formgebendem Aufbauschweißen hergestellt ist. Eine derart hergestellte Scheibe kann besonders stabil, einfach und kostengünstig insbesondere an der zugehörigen Schneckennabe angebracht sein.

Dabei ist die aufstauend wirkende Scheibe bevorzugt dort an der Schneckennabe angebracht, wo keine Wendelschaufel angeordnet ist. Besonders bevorzugt befindet sich die aufstauend wirkende Scheibe an einem konusförmigen Abschnitt der Schneckennabe, nach dem in Austragsrichtung der schweren Phase nur noch schwere Phase abzutransportieren ist. Die aufstauend wirkende Scheibe endet mit ihrem Durchmesser dabei radial weiter innen als die Trommel und dient damit als ein Wehr zum Verhindern eines Weitertransports der radial innen liegenden leichteren Phase in Austragsrichtung der schweren Phase.

Erfindungsgemäß vorteilhaft ist ferner an der Schneckenwendel ein Räumer ausgebildet, der ebenfalls mittels formgebendem Aufbauschweißen hergestellt ist. Der Räumer ist derart hergestellt ebenfalls besonders kostengünstig in der Produktion und besonders stabil während des Betriebs. Gerade ein solcher Räumer muss besonders stabil sein und hohen Krafteinwirkungen standhalten können. Er hat an einem in Austragsrichtung der schweren Phase sich befindenden Endbereich der Schneckenwendel die Funktion, dieselbe von schwerer Phase, insbesondere Feststoffen, abzuräumen.

### Kurzbeschreibung der Zeichnungen

Nachfolgend werden Ausführungsbeispiele der erfindungsgemäßen Lösung anhand der beigefügten schematischen Zeichnungen näher erläutert. Es zeigt:
- Fig. 1: einen ersten Teil eines Längsschnitts einer erfindungsgemäßen Vollmantelschneckenzentrifugen-Schnecke,
- Fig. 2: einen zweiten Teil des Längsschnitts gemäß Fig. 1,
- Fig. 3: eine Seitenansicht des Ausschnitts III gemäß Fig. 1,
- Fig. 4: das Detail IV gemäß Fig. 1 in vergrößerter Darstellung,
- Fig. 5: die Draufsicht V gemäß Fig. 2,
- Fig. 6: Varianten des Details VI gemäß Fig. 2,
- Fig. 7: eine erste Variante der Ansicht VII gemäß Fig. 5,
- Fig. 8: eine zweite Variante der Ansicht VII gemäß Fig. 5,
- Fig. 9: eine dritte Variante der Ansicht VII gemäß Fig. 5 und
- Fig. 10: eine vierte Variante der Ansicht VII gemäß Fig. 5.

### Detaillierte Beschreibung des Ausführungsbeispiels

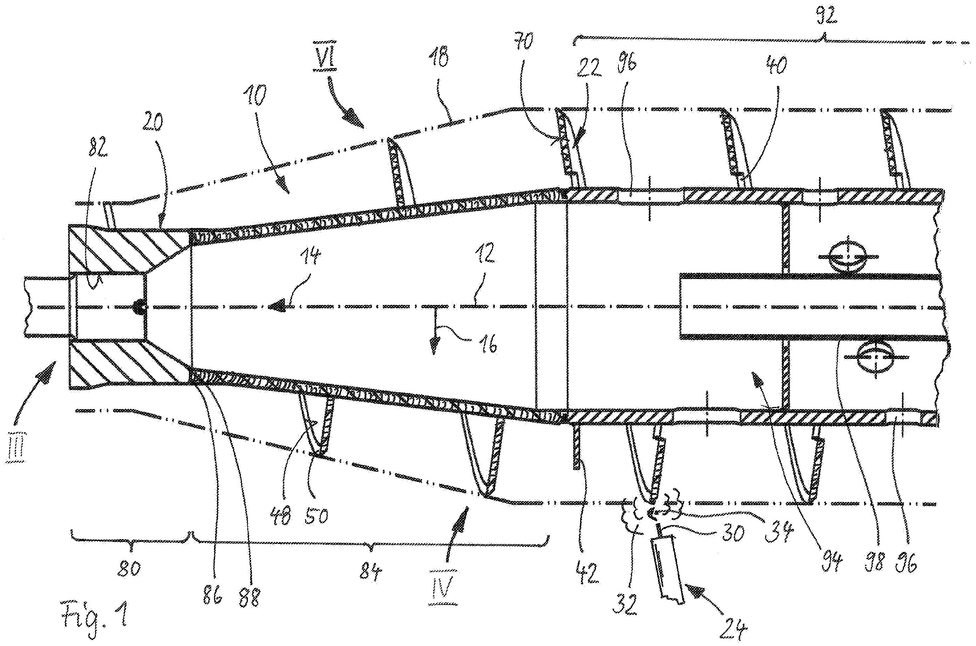

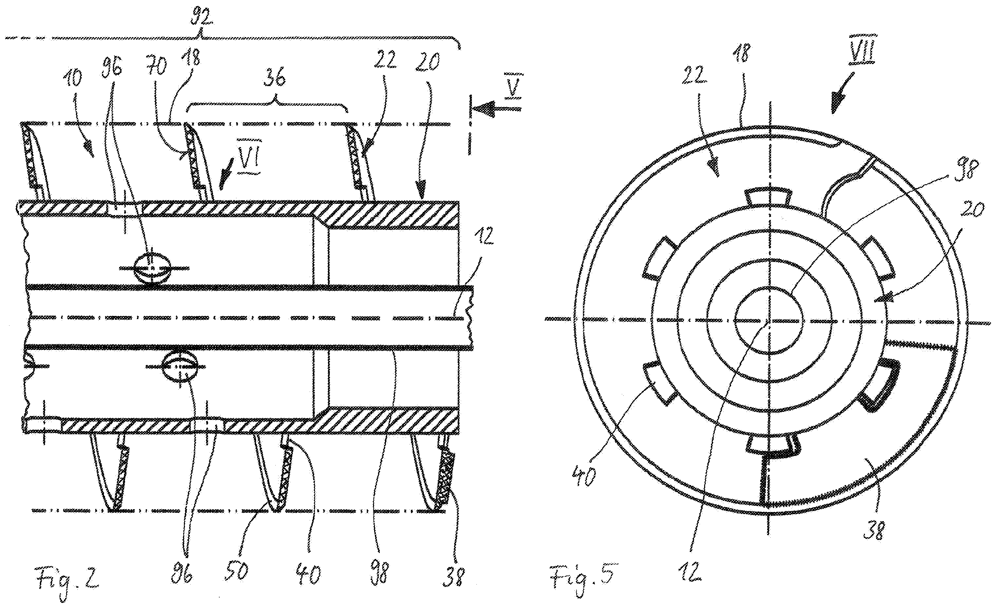

In den Fig. 1 bis 10 ist eine Schnecke 10 einer Vollmantelschneckenzentrifuge dargestellt, die als hier genanntes Werkstück herzustellen ist. Die Schnecke 10 weist eine Drehachse 12 auf, die eine Axialrichtung 14 und eine Radialrichtung 16 definiert.

Die Schnecke 10 ist von einer Trommel 18 umgeben und dient dazu, innerhalb der Trommel 18 aus einem Phasengemisch (nicht dargestellt) eine schwere Phase in Axialrichtung 14 auszutragen. Die Schnecke 10 ist mit einer zentralen Schneckennabe 20 und einer diese wendelförmig umgebenden Schneckenwendel 22 gestaltet.

Ferner ist eine Schutzgas-Schweißeinrichtung 24 bereitgestellt, mittels der die Schneckenwendel 22 in einem formgebenden Aufbauschweißen hergestellt ist. Dazu ist mittels der Schutzgas-Schweißeinrichtung 24 auf der Schneckennabe 20 eine erste Schweißschicht 26 und auf diese dann eine zweite Schweißschicht 28 aufgebracht. Ferner sind weitere zweite Schweißschichten in dieser Art übereinander bzw. aufeinander aufgebracht worden. So ist insgesamt ein flächiges, schraubenförmiges Element bzw. eine gewendelte Fläche entstanden, das bzw. die die Schneckenwendel 22 bildet.

Die Schneckennabe 20 dient bei diesem Herstellen der Schneckenwendel 22 mittels Aufbauschweißen als ein hier erster Grundkörper und wird während des Herstellens bewegt. Insbesondere wird die Schneckennabe 20 um ihre Drehachse 12 gedreht, während zugleich die Schutzgas-Schweißeinrichtung 24 in Axialrichtung 14 verfahren und dabei in Radialrichtung 16 schrittweise angehoben wird.

Die Schutzgas-Schweißeinrichtung 24 umfasst einen Schweißdraht 30 und wird im MSG-Verfahren mit einem Schweißgas 32 betrieben. Vorliegend hat das Schweißgas 32 aus einer der Untergruppen der Hauptgruppen I, M1, M2 oder N der Norm DIN EN ISO 14175 ausgewählt und weist einen Anteil an Kohlendioxid von weniger als 20 Volumen-Prozent nominell sowie einen Anteil an Sauerstoff von weniger als 3 Volumen-Prozent nominell auf. Dabei wird mittels der Schutzgas-Schweißeinrichtung 24 ein Lichtbogen 34 erzeugt, der vorliegend als Impulslichtbogen ausgeführt wird.

Die Schneckenwendel 22 kann auf diese Weise besonders einfach und kostengünstig, verzugsarm und zugleich besonders verschleißfest ausgeführt werden.

Insbesondere kann auch eine mehrgängige Wendel einfach hergestellt werden.

Auch kann die Schneckenwendel 22 mit einer Wendelsteigung 36 gestaltet werden, die in Axialrichtung 14 bzw. in Längsrichtung der Schnecke 10 variiert, also unterschiedlich groß ist.

An der Schneckenwendel 22 kann ferner mittels des formgebenden Aufbauschweißens zugleich ein Wuchtgewicht 38 hergestellt werden. Das Wuchtgewicht 38 kann mittels einzelner Schweißpunkte und/oder größeren Schweißmaterial-anhäufungen individuell und ortsgenau dimensioniert werden. Der Wuchtaufwand ist damit erheblich verringert.

Ferner ist die Schneckenwendel 22 sehr einfach und ohne spanende Verfahren mit diversen Durchgangsöffnungen 40 zu versehen, weil sie mit formgebendem Aufbauschweißen hergestellt ist.

Auch ist an der Schneckenwendel 22 zugleich eine aufstauend wirkende Scheibe 42 mittels formgebendem Aufbauschweißen hergestellt. Die Scheibe 42 kann als Stauscheibe, aber auch als Tauchscheibe oder Flotatscheibe wirken.

Darüber hinaus ist an der Schneckenwendel 22 auch ein Räumer 44 an deren Endbereich an der Schneckennabe 22 mittels des formgebenden Aufbauschweißens angeformt.

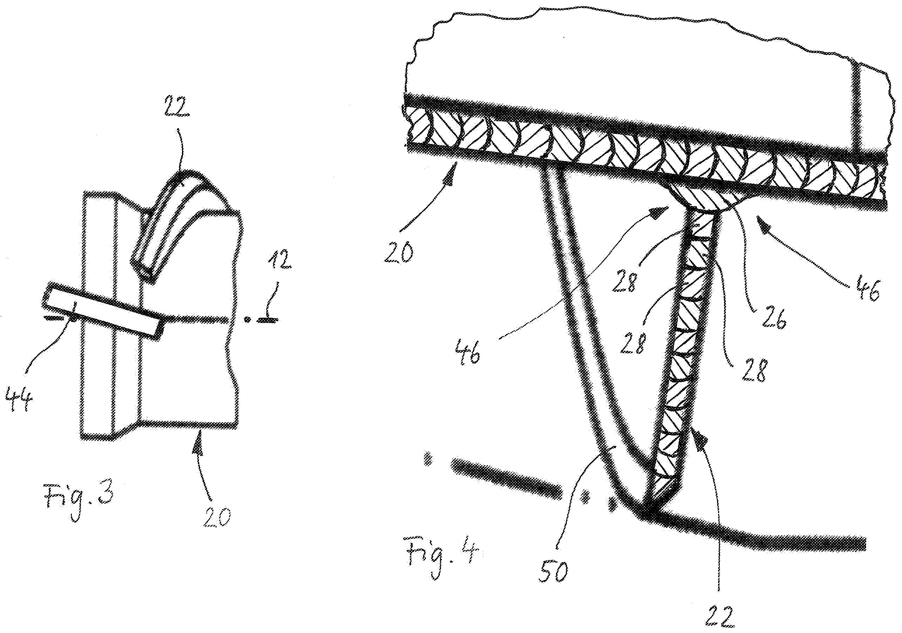

Ein Übergang 46 von der Schneckennabe 20 zur Schneckenwendel 22 ist mittels des formgebenden Aufbauschweißens als Rundung, Fase bzw. Schrägung gestaltet. Dazu ist die erste Schweißschicht 26, wie in Fig. 4 veranschaulicht ist, breiter hergestellt, als die darüber angeordnete zweite Schweißschicht 28. Die breitere Schweißschicht 26 wird insbesondere mit einem höheren Schweißstrom, einem Pendelschweißvorgang oder einem geringeren Schweißvorschub hergestellt.

Eine seitliche Wendelfläche 48 der Schneckenwendel 22 ist nach deren Herstellung mittels Aufbauschweißen mechanisch nachbearbeitet worden. Eine solche Nachbearbeitung ist jedoch nicht zwingend erforderlich. An der Wendelfläche 48 ist ferner wahlweise eine verschleißfeste Beschichtung 50 aus Wolframcarbit hergestellt worden. Diese Beschichtung ist ebenfalls mittels der Schutzgas-Schweißeinrichtung 24 durch Auftragsschweißen als eine einzelne Schicht hergestellt worden.

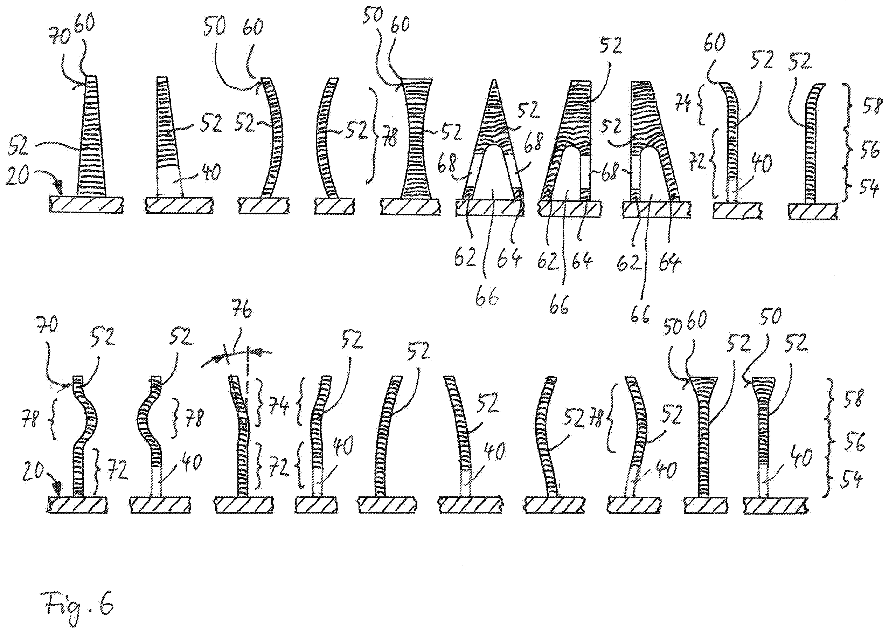

Von der Schneckenwendel 22 ist deren Wendelquerschnittsfläche 52 gemäß der Fig. 6 in verschiedenen Varianten vorteilhaft profiliert ausgebildet. Dabei weist die Wendelquerschnittsfläche 52 radial innen einen Wendelfuß 54, radial weiter außen einen Wendelhals 56 und radial ganz außen einen Wendelkopf 58 auf.

Die Wendelquerschnittsfläche 52 ist gemäß den beiden Varianten in Fig. 6 oben links in Radialrichtung 16 sich nach radial außen verjüngend gestaltet. Gemäß einer Variante in Fig. 6 oben Mitte und zwei Varianten in Fig. 6 unten rechts weist die profilierte Wendelquerschnittsfläche 52 einen Wendelkopf 58 auf, der in Axialrichtung 14 verdickt gestaltet ist.

Bei mehreren Varianten ist an dem Wendelkopf 58 eine axial zur Räumrichtung hin geneigte Räumkante 60 ausgebildet, die die Beschichtung 50 trägt.

Gemäß drei Varianten in Fig. 6 oben Mitte weist die Wendelquerschnittsfläche 52 einen ersten Stützsteg 62 und einen zweiten Stützsteg 64 auf, wobei die Stützstege 62 und 64 weitgehend radial gerichtet sind. In Axialrichtung 14 zwischen den Stützstegen 62 und 64 befindet sich ein Freiraum 66. Auf diese Weise ist eine leichte und zugleich statisch besonders stabile Konstruktion geschaffen.

Eine Durchgangsöffnung 68 durchsetzt zumindest einen der Stützstege 62 und 64 und befindet sich insbesondere in dem von einer Räumseite 70 der Schneckenwendel 22 abgewandten, zweiten Stützsteg 64.

Gemäß Varianten in Fig. 6 oben rechts und unten links weist die profilierte Wendelquerschnittsfläche 52 einen ersten Abschnitt 72 auf, der sich in Radialrichtung 16 erstreckt und einen zweiten Abschnitt 74, der zur Radialrichtung 16 geneigt gestaltet ist. Ein Anstellwinkel 76 bzw. eine Neigung dieses zweiten Abschnitts 74 beträgt dabei vorzugsweise zwischen 10° und 40°, insbesondere zwischen 15° und 20°.

Gemäß mehrerer Varianten in Fig. 6 oben und unten weist die profilierte Wendelquerschnittsfläche 52 einen dritten Abschnitt 78 auf, der im Querschnitt betrachtet in der Form einer Schale gewölbt ist.

Die Schneckennabe 20 ist ebenfalls zumindest teilweise mittels formgebendem Aufbauschweißens mit der Schutzgas-Schweißeinrichtung 24 hergestellt worden.

Dabei weist die Schneckennabe 20 bezogen auf Fig. 1 ganz links einen zylindrischen, ersten Längsabschnitt 80 auf, der als hier zweiter Grundkörper für das Auf-bauschweißen dient. Der Längsabschnitt 80 ist entsprechend selbst nicht mittels Aufbauschweißen hergestellt worden, sondern herkömmlich als Rohr, welches ferner gedreht und gefräst worden ist.

An dem Längsabschnitt 80 ist mittels Drehen bzw. Drehverfahren eine erste Lagerabstützung 82 für die Schnecke 10 ausgebildet worden.

Auf den Längsabschnitt 80 folgt an der Schneckennabe 20 in Richtung der Drehachse 10 ein kegelstumpfförmiger, zweiter Längsabschnitt 84, der mittels formgebendem Aufbauschweißen hergestellt ist. Dabei sind an dem Längsabschnitt 84 zunächst eine ringförmige erste Schweißschicht 86 und auf diese dann in Richtung der Drehachse 12 bzw. entgegen der Axialrichtung 14 eine zweite Schweißschicht 88 sowie viele weitere zweite Schweißschichten aufgebracht worden.

Beim derartigen Aufbauschweißen ist der erste Längsabschnitt 80 bewegt und insbesondere gedreht worden, wobei die Schutzgas-Schweißeinrichtung 24 dann entgegen der Axialrichtung 14 zu verfahren, ansonsten aber nur geringfügig radial zu bewegen ist, um die Kegelstumpfform auszubilden.

Auf den zweiten Längsabschnitt 84 folgt entgegen der Axialrichtung 14 ein zylindrischer, dritter Längsabschnitt 92, der im Wesentlichen rohrförmig und in konventioneller Weise hergestellt ist. Der Längsabschnitt 92 kann auch vorteilhaft mittels Aufbauschweißen hergestellt sein und dabei insbesondere gitterförmig gestaltet sein. An dem Längsabschnitt 92 befindet sich eine Einlaufkammer 94, in die das zu klärende Phasengemisch einzubringen ist. Diese Einlaufkammer 94 ist besonders vorteilhaft mittels formgebendem Aufbauschweißen hergestellt, weil an ihr dann individuell gestaltete Strömungsflächen ausgebildet sein können.

Ferner können Austrittsöffnungen 96, welche im Längsabschnitt 92 im Bereich der Einlaufkammer 94 herzustellen sind, vorteilhaft mittels Aufbauschweißen ausgebildet werden.

Im Bereich des Längsabschnitts 92 befindet sich radial innen bzw. konzentrisch zur Drehachse 12 ein Einlaufrohr 98. Dieses Einlaufrohr 98 ist ebenfalls vorteilhaft mittels formgebendem Aufbauschweißen hergestellt, so dass auch an ihm gezielt besondere Strömungs- und Leitflächen ausgebildet sein können.

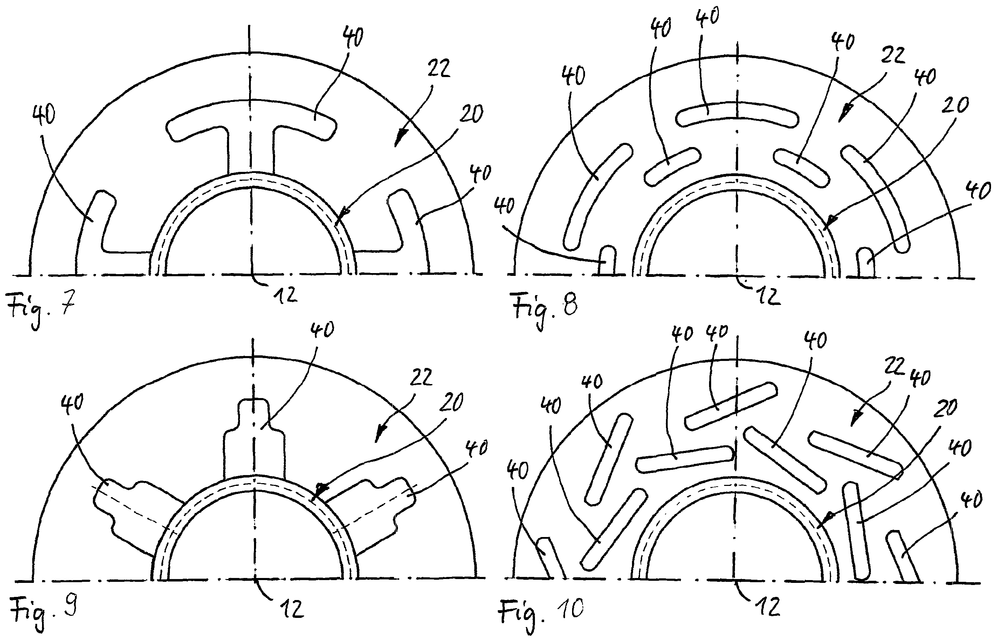

In den Fig. 7 bis 10 sind verschiedene Ausführungsformen von Durchgangsöffnungen 40 in der jeweils zugehörigen Schneckenwendel 22 mit zugehöriger Schneckennabe 20 dargestellt.

Dabei weist die einzelne Durchgangsöffnung 40 gemäß Fig. 7 radial mittig einen in Umfangsrichtung besonders breiten Abschnitt auf. Durch diesen Abschnitt kann gezielt eine Mittelschicht des zu klärenden Phasengemisches durch die Schneckenwendel 22 hindurchtreten.

Gemäß Fig. 8 sind in Radialrichtung 16 mehrere Durchgangsöffnung 40 auf zwei unterschiedlichen Radien angeordnet. Dabei weisen die radial äußeren Durchgangsöffnungen 40 in Umfangsrichtung eine größere Breite auf, als die radial innen liegenden Durchgangsöffnungen. Auch mit dieser Ausführungsform kann gezielt zu klärendes Material einer Umfangsschicht durch die Schneckenwendel 22 hindurchtreten.

In Fig. 9 ist eine Ausführungsform dargestellt, bei der die Durchgangsöffnungen 40 radial innen breiter sind, als radial außen. Dieser Breitenunterschied in Umfangs-richtung ist gestuft gestaltet. Mit dieser Ausführungsform kann an der Schnecken-wendel 22 gezielt mehr Material hindurchtreten, wenn dieses nach innen hin den Radius der Stufe erreicht hat.

Fig. 10 zeigt schließlich eine Ausführungsform, bei der die Durchgangsöffnungen 40 als zur Radialrichtung 16 schräg geneigte, gerade Schlitze gestaltet sind. die derartigen Schlitze führen beim Durchtritt von Material durch sie hindurch zu einer Durchmischung und damit zu einem Aufbrechen des zu klärenden Materials.

### Bezugszeichenliste

- 10: Schnecke
- 12: Drehachse
- 14: Axialrichtung
- 16: Radialrichtung
- 18: Trommel
- 20: Schneckennabe
- 22: Schneckenwendel
- 24: Schutzgas-Schweißeinrichtung
- 26: erste Schweißschicht der Schneckenwendel
- 28: zweite Scheißschicht der Schneckenwendel 15 30 Schweißdraht
- 32: Schweißgas
- 34: Lichtbogen
- 36: Wendelsteigung
- 38: Wuchtgewicht
- 40: Durchgangsöffnung
- 42: Scheibe
- 44: Räumer
- 46: Übergang
- 48: Wendelfläche
- 50: Beschichtung
- 52: Wendelquerschnittsfläche
- 54: Wendelfuß
- 56: Wendelhals
- 58: Wendelkopf
- 60: Räumkante
- 62: erster Stützsteg
- 64: zweiter Stützsteg
- 66: Freiraum
- 68: Durchgangsöffnung
- 70: Räumseite
- 72: erster Abschnitt der Wendelquerschnittfläche
- 74: zweiter Abschnitt der Wendelquerschnittfläche
- 76: Anstellwinkel
- 78: dritter Abschnitt der Wendelquerschnittfläche
- 80: erster Längsabschnitt der Schneckennabe
- 82: erste Lagerabstützung
- 84: zweiter Längsabschnitt der Schneckennabe
- 86: erste Schweißschicht an der Schneckennabe
- 88: zweite Schweißschicht an der Schneckennabe
- 92: dritter Längsabschnitt der Schneckennabe 15
- 94: Einlaufkammer
- 96: Austrittsöffnung
- 98: Einlaufrohr

## Patentansprüche

1. Vollmantelschneckenzentrifugen-Schnecke (10) mit einer Schneckennabe (20), **dadurch gekennzeichnet, dass**
die Schneckennabe (20) mittels formgebendem Aufbauschweißen hergestellt ist, wobei die Schneckennabe (20) aus Schweißnähten bzw. Schweißschichten gebildet ist, wobei
eine erste Schweißschicht kreisförmig an einem metallischen Grundkörper aufgetragen ist und auf die erste Schweißschicht nachfolgend eine zweite Schweißschicht und auf die zweite Schweißschicht nachfolgend eine dritte Schweißschicht und so weiter aufgetragen ist, wobei die derart nacheinander und aufeinander aufgetragenen Schweißschichten einen Hohlzylinder bilden.

2. Vollmantelschneckenzentrifugen-Schnecke nach Anspruch 1,
**dadurch gekennzeichnet, dass**
die Schneckennabe (20) einen zylindrischen Längsabschnitt (92) aufweist, der als Rohr mittels eines herkömmlichen Verfahrens hergestellt ist.

3. Vollmantelschneckenzentrifugen-Schnecke nach Anspruch 1 oder 2,
**dadurch gekennzeichnet, dass**
die Schneckennabe (20) einen kegelstumpfförmigen Längsabschnitt (84) aufweist, der mittels formgebendem Aufbauschweißen hergestellt ist.

4. Vollmantelschneckenzentrifugen-Schnecke nach einem der Ansprüche 1 bis 3,
**dadurch gekennzeichnet, dass**
die Schneckennabe (20) einen gitterförmigen Längsabschnitt aufweist, der mittels formgebendem Aufbauschweißen hergestellt ist.

5. Vollmantelschneckenzentrifugen-Schnecke nach einem der Ansprüche 1 bis 4,
**dadurch gekennzeichnet, dass**
die Schneckennabe (20) eine Einlaufkammer (94) aufweist, die mittels formgebendem Aufbauschweißen hergestellt ist.

6. Vollmantelschneckenzentrifugen-Schnecke nach einem der Ansprüche 1 bis 5,
**dadurch gekennzeichnet, dass**
die Schneckennabe (20) ein Einlaufrohr (98) aufweist, das mittels formgebendem Aufbauschweißen hergestellt ist.

7. Vollmantelschneckenzentrifugen-Schnecke nach einem der Ansprüche 1 bis 6,
**dadurch gekennzeichnet, dass**
die Schneckennabe (20) mindestens eine Lagerabstützung (82), aufweist,
die mittels eines herkömmlichen Drehverfahrens hergestellt ist.

8. Herstellungsverfahren einer Vollmantelschneckenzentrifugen-Schnecke (10), **dadurch gekennzeichnet, dass** die Schneckennabe (20) der Vollmantelschneckenzentrifugen-Schnecke (10) mittels formgebendem Aufbauschweißen hergestellt wird,
wobei das Aufbauschweißen mittels einer Schweißeinrichtung (24) mit einem Schweißgas erfolgt und die Schneckennabe (20) während des Aufbauschweißens gedreht wird.

## Claims

1. A solid-bowl centrifuge screw (10) with a screw hub (20), **characterized in that** the screw hub (20) is produced by means of shaping build-up welding, wherein the screw hub (20) is formed from welding seams or welding layers, respectively, wherein
a first welding layer is applied to a metallic base body in a circular manner and a second welding layer is applied subsequently to the first welding layer and a third welding layer is applied subsequently to the second welding layer and so on, wherein the welding layers applied one after the other and one on top of the other in this way form a hollow cylinder.

2. The solid-bowl centrifuge screw according to claim 1,
**characterized in that**
the screw hub (20) has a cylindrical longitudinal portion (92), which is produced as pipe by means of a conventional method.

3. The solid-bowl centrifuge screw according to claim 1 or 2,
**characterized in that**
the screw hub (20) has a frustoconical longitudinal portion (84), which is produced by means of shaping build-up welding.

4. The solid-bowl centrifuge screw according to one of claims 1 to 3,
**characterized in that**
the screw hub (20) has a grid-shaped longitudinal portion, which is produced by means of shaping build-up welding.

5. The solid-bowl centrifuge screw according to one of claims 1 to 4,
**characterized in that**
the screw hub (20) has an inlet chamber (94), which is produced by means of shaping build-up welding.

6. The solid-bowl centrifuge screw according to one of claims 1 to 5,
**characterized in that**
the screw hub (20) has an inlet pipe (98), which s produced by means of shaping build-up welding.

7. The solid-bowl centrifuge screw according to one of claims 1 to 6,
**characterized in that**
the screw hub (20) has at least one bearing support (82), which is produced by means of a conventional turning method.

8. A production method for a solid-bowl centrifuge screw (10),
**characterized in that**
the screw hub (20) of the solid-bowl centrifuge screw (10) is produced by means of shaping build-up welding, wherein the shaping build-up welding takes place by means of a welding device (24) with a welding gas and the screw hub (20) is turned during the build-up welding.

## Revendications

1. Vis (10) de centrifugeuse à vis à bol plein, dotée d'un moyeu de vis (20), **caractérisée en ce que** le moyeu de vis (20) est fabriqué au moyen d'un soudage de façonnage par rechargement, le moyeu de vis (20) étant constitué de cordons de soudure ou de couches de soudure,
une première couche de soudure étant appliquée sous forme circulaire sur un corps de base métallique et sur la première couche de soudure étant appliquée ensuite une deuxième couche de soudure et sur la deuxième couche de soudure étant appliquée ensuite une troisième couche de soudure et ainsi de suite, les couches de soudure appliquées successivement de la sorte constituant un cylindre creux.

2. Vis de centrifugeuse à vis à bol plein selon la revendication 1,
**caractérisée en ce que**
le moyeu de vis (20) comporte une portion longitudinale (92) cylindrique, qui au moyen d'un procédé usuel, est fabriquée sous la forme d'un tube.

3. Vis de centrifugeuse à vis à bol plein selon la revendication 1 ou 2,
**caractérisée en ce que**
le moyeu de vis (20) comporte une portion longitudinale (84) de forme tronconique, qui est fabriquée au moyen d'un soudage de façonnage par rechargement.

4. Vis de centrifugeuse à vis à bol plein selon l'une quelconque des revendications 1 à 3,
**caractérisée en ce que**
le moyeu de vis (20) comporte une portion longitudinale en forme de grille, qui est fabriquée au moyen d'un soudage de façonnage par rechargement.

5. Vis de centrifugeuse à vis à bol plein selon l'une quelconque des revendications 1 à 4,
**caractérisée en ce que**
le moyeu de vis (20) comporte une chambre d'entrée (94), qui est fabriquée au moyen d'un soudage de façonnage par rechargement.

6. Vis de centrifugeuse à vis à bol plein selon l'une quelconque des revendications 1 à 5,
**caractérisée en ce que**
le moyeu de vis (20) comporte un tube d'entrée (98), qui est fabriqué au moyen d'un soudage de façonnage par rechargement.

7. Vis de centrifugeuse à vis à bol plein selon l'une quelconque des revendications 1 à 6,
**caractérisée en ce que**
le moyeu de vis (20) comporte au moins un support de palier (82), qui est fabriqué au moyen d'un procédé de tournage usuel.

8. Procédé de fabrication d'une vis (10) de centrifugeuse à vis à bol plein,
**caractérisé en ce que**
le moyeu de vis (20) de la vis (10) de centrifugeuse à vis à bol plein est fabriqué au moyen d'un soudage de façonnage par rechargement, le soudage par rechargement s'effectuant au moyen d'un dispositif de soudage (24), à l'aide d'un gaz de soudage et le moyeu de vis (20) étant tourné pendant le soudage par rechargement.
